# EUROPEAN PATENT SPECIFICATION

(11) **EP 0 978 313 B1**
(45) Date of publication and mention of the grant of the patent: **08.10.2003**
(21) Application number: 98905424.2
(22) Date of filing: 04.03.1998
(51) Int. Cl.: B01J 20/20, B01D 53/02

(54) **NATURAL SILICATES WITH FIBROUS STRUCTURE**
NATÜRLICHE SILIKATE MIT FASESTRUKTUR
SILICATES NATURELS A STRUCTURE FIBREUSE

(30) Priority: 05.03.1997 WO PCT/ES97/00050
(43) Date of publication of application: 09.02.2000
(73) Proprietor: Blanco Alvarez, Jesus, 28043 Madrid (ES); Romero Salvador, Arturo, 28668 Boadilla del Monte (ES)
(72) Inventor: BLANCO ALVAREZ, Jesus, 28036 Madrid (ES); ROMERO SALVADOR, Arturo, 28668 Boadilla del Monte (ES); ALVAREZ SAIZ, Esperanza, 28036 Madrid (ES)
(86) International application number: ES9800053
(87) International publication number: WO98039093

(56) References cited:
- US-A- 4 518 704
- US-A- 4 677 086
- US-A- 5 488 021

## Description

### OBJECTIVE OF THE INVENTION

This invention relates to bodies of natural silicates having a fibrous structure and which may undergo plastic deformation in the presence of humidity that contains activated carbons homogeneously incorporated inside the mass. These new materials which have a micro, meso and macroporous structure, combine the high surface performances of the activated carbon with the textural characteristics of the fibrous silicates. In one application, said new materials can be used to prepare monoliths or perforated structures presenting multiple channels which are parallel to the longitudinal axis and intended to be used as adsorbents in the treatment of large gas volumes, while offering high abrasion resistance and low pressure drop during the passage of the gas to be treated, as well as a high adsorption capacity especially for high molecular weight compounds.

### BACKGROUND OF THE INVENTION

The active carbons are materials from biological origin, mainly formed of carbon atoms which have been processed to produce materials of high porosity (F. Rodriguez Reinoso, J.D. Lopez González and C. Berenguer, Carbon **20** No.6 (1991) 513-518. The most important property of these materials is their high adsorption capacity due to their large specific surface area and highly developed porosity. The applications of these materials in industrial treatment units for the elimination of colors, tastes, odors and other liquid impurities and in processes for separation of solutes are well known. Moreover, their application in gas purification or in organic vapor recuperation is of general use, see for example "Encyclopedia of Chemical Technology, Kirk-Othmer. Third Edition. Vol 4, pag. 561-569. Wiley-Inter Science (1978)".

Activated carbon is formed (R.E. Franklin, Acta Cryst. 3 (1950) 107) by elemental microcrystals with similar dimensions to the graphitic structure disposed as parallel sheets made up of six-membered carbon rings. Contrary to the graphitic structure, the parallel sheets are not perfectly organized with respect to the perpendicular axes; the spaces among the sheets and the crystal defects giving rise to the microporous structure of these materials.

It is known that some clays present plasticity properties. Plasticity signifies the property of the clay when wetted that permits deformation by application of relatively slight pressure and retention of the deformed shape after release of the pressure. These compounds become vitreous when fired at a sufficiently high temperature. The clay minerals, mostly phylosilicates, are hydrous silicates of Al, Mg and Fe and other less abundant elements, which in some cases contain alumina and frequently quartz and other natural hard rocks. These materials, are composed of fine crystals or particles, often colloidal in size which give rise to materials of high surface area with capacity for physical adsorption and chemisorption. These small particles may be configured by small plates or with a fibrous structure which is the case of attapulgite and sepiolite. The fibrous structure gives to the referred materials certain properties which are not present in the clays configurated by small plates.

Sepiolite is a natural silicate, which may be found as α-sepiolite or ρ-sepiolite with structure of bunches of crystalline fibers or as β-sepiolite as amorphous aggregates, small plates or rods. Besides, the sepiolite may adopt different macroscopic configurations (compact, sponges, etc.). The sepiolite's shape could be very important as far as its different applications; for example in the US 4,266,672 patent where a procedure for hydrocarbon cracking is described, the sepiolite rods structure must be used to obtain the desirable catalytic activity.

Sepiolites have a fibrous structure consisting of talc-type ribbons with two sheets of tetrahedral silica units linked to an octohedral sheet of magnesium units through oxygen atoms. The alternating arrangement of said units determines the presence of channels oriented in the direction of the fiber, the section whereof is 0.36 x 1.06mm [0.36 x 10.6 Å]. This structure Si₁₂Mg₈O₃₀(OH)₄.8H₂O, has adsorbed water, water of crystallization and constitutional water. More detailed information may found in the review published by Alvarez, A. Palygorskite-Sepiolite Occurrences. Genesis and Uses. Section VI, pp 253-286. Ed. by Singer and Galan. Elsevier, 1984. From this peculiar structure which may be modified by different treatments, its properties as adsorbent or catalyst are derived.

In recent years, the regulations for environmental protection have increased the demand of adsorbent materials for use in the treatment and purification of effluents. This stringent demand is becoming more selective in the sense that the adsorbent performance should fit the requirements of the purification process where it is going to be used.

The applications of these materials for gas stream purification not only require high adsorption performance but also low pressure drop as the gas flows through the material. High mechanical strength properties, especially attrition resistance are often demanded.

To accomplish the pressure drop requirement, the adsorption material is shaped as plates or sheets or preferably as structures comprising multiple channels which are parallel to the longitudinal axes, commonly designated as monoliths. The pressure drop as the gas flows through the adsorbent conformed in this way is two or three orders of magnitude lower than that corresponding to conventional granular beds, e.g. De Luca, J.P. and Campbell, L.E. Adv. Mat. Cat., 293 (1977). These monolithic structures have their major application in cars catalytic converters, although their use has been extended in recent years to others industrial applications, especially in the design and operation of adsorption units.

Nowadays, several procedures for the preparation of adsorbent monoliths based on the microporous structure of activated carbon have been registered: In US 5,543,096 and US 5,451,554 patents, celluloses, bentonite and epoxy or silicone resins are used as binders of the activated carbon powder, firing the mixture at 1200°C; in US 5,510,063, US 5,488,021 and US 4,399,052 patents, previously conformed resins are activated by thermal treatment in an adequate atmosphere to obtain the activated carbon monolith bodies; in US 5,389,325 patent, phenolic resins are used along with other organic binders to form the activated carbon monoliths; in US 5,376,609 patent, the binders are bentonite and celluloses; in US 5,356,852 patent, the binders are celluloses and polyvinyl alcohol resin; in US 5,215,690 patent, a mixture of carbon, celluloses and furfuryl alcohol is shaped as a monolith and further activated at high temperature. In other procedures, US 5,487,917 and US 5,451,444 patents, the previously configured ceramic or metallic structures are coated by the activated carbon.

In US 5,488,021 patent, the binders comprising 2-12 wt% celluloses along with 2-30 wt% of attapulgite in aqueous dispersion, are mixed with the powdered activated carbon (5-40 µm); the mixture is extruded and dried. In US 4,518,704 patent, a mixture of activated carbon and 30-70 wt% of clay is shaped as a monolithic structure and heated up to 1100°C in an inert atmosphere to create links between the activated carbon and the inorganic binder.

According to the above mentioned documents, the state of art for preparation of monolithic bodies of adsorbent materials based on activated carbon follows the ensuing procedures: (a) The monoliths from powdered activated carbon are prepared with the help of organic binders with the subsequent loss of adsorption properties as the carbon granules are partially covered by such organic compounds; (b) the monoliths are prepared from precursors of the activated carbon and consequently must be further activated at high temperature in special atmospheres to obtain the activated carbon; (c) ceramic or metallic monolithic structures are coated by the activated carbon, obtaining materials with low attrition resistance. In these three procedures, the obtained bodies are claimed to present only the microporosity due to the activated carbon; therefore, they should have severe limitations for the dynamic adsorption of large molecular volume compounds.

### SUMMARY OF THE INVENTION

In the present invention, to obtain materials of low cost which may easily be conformed as monoliths with excellent micro, meso and macroporous surface capabilities and high mechanical resistance, the plasticity and textural properties of natural fibrous silicates and those corresponding to the activated carbon microporosity are combined. No organic binders are used and the treatment of the dried bodies at high temperature is not necessary.

The object of the present invention is achieved by a composition according to claim 1, a method of making the composition according to claim 3 and the use of the composition according to claim 5. Preferred embodiments are specified in the subclaims.

The pore size classification adopted in this document corresponds to the IUPAC "Manual of Symbols and Terminology of Physicochemical Quantities and Units" E. Butterworths. London (1972). This classification is based on the fact that there are different adsorption mechanisms which depend on the relationship between the adsorbent pore size and the adsorbate molecular size.

### DETAILED DESCRIPTION OF THE INVENTION

The object of this invention is to obtain materials with excellent surface capabilities, high mechanical and attrition resistances which may be easily conformed as monoliths by the combination of the plasticity and textural properties of natural fibrous silicates with the characteristic properties of the activated carbon.

In gas or vapor adsorption applications, the accessible surface depends on the adsorbate molecular volume and the pore size distribution of the adsorbent material For the adsorption of large molecules, the use of adsorbents having an adequate pore size diameter distribution is required. The intimate mixture of the two compounds above mentioned produce a double effect: (a) giving rise to new materials with slight increase in surface area and higher volumes of meso and macropores compared with the values corresponding to the raw materials taking into account their percentages in the initial mixture; (b) the activated carbon homogeneously incorporated within the mass of the clay significantly reduces the shrinkage produced when green bodies made up only with these silicates are dried or undergo thermal treatment.

The natural sepiolite used in this invention is α-sepiolite, in compact form, which is very abundant in Spain and commercially known as "Sepiolita de Vallecas" with the following typical impurities: Al₂O₃: 2.6%; Fe₂O₃: 0.3%; K₂O: 0.6%; CaO: 0.9% and Na₂O: 0.1% by weight.

The preparation of the adsorbent bodies of the present invention include the following steps: powders of α-sepiolite and activated carbon are mixed homogeneously; in a second step this powder mixture is kneaded with water in a high-shear blender. The elemental needle-like particles of the sepiolite are mainly present as bunches; when these particles are kneaded adequately in an aqueous medium (or others polar solvents) the spaces among the bunches swell allowing the incorporation of the solvent into the sepiolite structure, mainly due to the formation of bonds between the hydrogen of the superficial silanol groups of the sepiolite and the solvent molecules. When activated carbon particles are also present during the kneading of the clay with water, this pseudoplastic mass incorporated together with water, the active carbon particles giving rise to an intimate mixture of both compounds. The obtained doughs have excellent rheological properties in terms of their industrial manufacture as monoliths. In the third step, the dough is molded or extruded to prepare any convenient size or shape. Finally, the obtained bodies are dried at a temperature below that where the activated carbon oxidation takes place. For special applications, these bodies may also be treated at temperatures of 400-500°C in an inert atmosphere.

When these materials are shaped as plates or preferably as perforated structures presenting multiple channels which are parallel to the longitudinal axis -monoliths-, bodies with high surface performances and high attrition resistance which allow the treatment of large gas flows with low pressure drop are obtained.

The incorporation of other clays in quantities lower than 10 wt% may improve the mechanical properties of the obtained bodies.

In other application, these materials may be treated at high temperature in an air atmosphere to obtain ceramic structures of controlled porosity by removing the activated carbon.

The following example is provided to illustrate the present invention and it may not be considered limited to such.

A commercial steam activated carbon from pinetree sawdust was used. This material presents a humidity of 3% by weight, an ash content of 8.5% by weight, an apparent density of 0.45 g/cm³ and a pH of 9. The N₂ BET surface area is 1200 m²/g and the total pore volume is 0.62 mL/g. The total pore volume of pores greater than 8 nm in diameter is 0.05 mL/g, according to mercury intrusion measurements.

The sepiolite from Vallecas underwent a heat treatment at 270°C for 3 hours. The treated material has a surface area of 250 m²/g and a total pore volume of 0.42 mL/g, according to the results obtained from N₂ adsorption-desorption isotherms using the BET method. The total pore volume of pores greater than 8 nm in diameter is 0.64 mL/g, according to the results obtained from mercury intrusion technique.

One kilogram of sepiolite having a particle size below the range of 0.1-0.3 mm was mixed with one kilogram of dried activated carbon having a particle size below 0.1 mm. Once a homogeneous mixture was obtained, the material was kneaded using a double-sigma kneader. Deionized water was slowly added from the beginning of the procedure until the required water content was reached. The wet material was kneaded for 4 hours. The conformation process of this, dough by extrusion was the next step. The shaped material was a parallelepiped structure with external dimensions of 5 x 5 x 100 cm, which presents parallel channels located along the longitudinal axis. The square channels have a transverse section with dimensions of 0.25 x 0.25 cm, wall thickness of 0.09 cm and a geometric surface of 8.65 cm²/cm³. These conformed pieces were first dried at room temperature for 24 hours and subsequently treated at 270°C for 3 hours in air.

The monolith obtained by this manufacturing procedure presents a mechanical strength of 150 kg/cm² and a high attrition resistance as observed when the sample underwent a specific treatment consisting in flowing air at room temperature for 3000 hours through the channels at 7 m/s linear velocity without any decrease in weight. The total shrinkage of 8% over the three axes took place after heat treatment of the green monolithic material at 270°C. With respect to the textural properties, the final product presents a N₂ BET surface area of 760 m²/g and a total pore volume of 0.72 mL/g. The total pore volume of pores greater than 8 nm is 0.55 mL/g measured by the mercury intrusion technique.

Acetone adsorption-desorption experiments were carried out under a dynamic regime using 35.15 g of monolith as adsorbent material, which has a length of 26.8 cm and contains 21 cells. An air flow of 4 liters per minute which contains 0.24 mg of acetone per minute and gram of adsorbent was passed through this material at 25°C and atmospheric pressure. During the first 5 hours in operation the acetone was completely adsorbed by the manufactured product. After this period of time, a progressive decrease in the adsorption rate was observed reaching the value of 0.22 mg of acetone per minute and gram of adsorbent after 7 hours in operation and 0.10 mg of acetone per minute and gram of adsorbent after 10 hours in operation. The adsorption capacity broke down after 13 hours in operation, being 0.12 g of acetone per gram of adsorbent the total amount of adsorbed acetone.

In the desorption step, the same flow rate of air, as in the previous adsorption process, was used with a temperature increase of 7°C/min up to 150°C. This temperature was kept for 3 hours during which 95% of the total adsorbed acetone was removed. The remaining 5% of acetone was desorbed when the sample was heated up to 250°C with the same heating rate of 7°C/min.

A similar test was performed using ortho-dichlorobenzene as the probe molecule which gave an adsorption capacity of 0.24 grams per gram of the test adsorbent.

## Claims

1. A composition comprising natural silicates with fibrous structure and plasticizing properties wherein activated carbon is homogeneously dispersed into the silicate structure **characterized in that** the composition does not include an organic binder and wherein the natural silicates is α-sepiolite.

2. A composition according to claim 1 or 2 wherein the silicate/activated carbon ratio is 0.5≤r≤ 4 by weight.

3. A method of making the composition 1 or 2 comprising the steps:
a mixing powders of the α-sepiolite and activated carbon to obtain a homogenous mixture of such powders;
b. high speed shear kneading of the powdered mixture with water addition to obtain a dough;
c. conforming the wetted dough into the desired shaped pieces of the material;
d. drying in air the conformed pieces at a temperature below that at which oxidation of the used activated carbon takes place.

4. The method of claim 3, comprising wherein the wetted dough is conformed into desired shaped pieces by extrusion to obtain a structure with parallel channels along the longitudinal axes in a number greater than 2 and lower than 100 channels per square centimetres of transverse section.

5. Use of the composition made according to the method of claim 3 or 4 as adsorbent material for gases and vapors.

## Patentansprüche

1. Eine Zusammensetzung umfassend natürliches Silikat mit Faserstruktur und plastischen Eigenschaften, worin aktivierter Kohlenstoff homogen in der Silikatstruktur verteilt ist, **dadurch gekennzeichnet, dass** die Zusammensetzung kein organisches Bindemittel enthält und worin das natürliche Silikat α-Sepiolith ist.

2. Eine Zusammensetzung gemäß Anspruch 1 oder 2, worin das Gewichtsverhältnis r von Silikat zu aktiviertem Kohlenstoff 0,5 = r = 4 beträgt.

3. Ein Verfahren zur Herstellung der Zusammensetzung nach Anspruch 1 oder 2, umfassend die Schritte:
a. Mischen von Pulvern von α-Sepiolith und aktiviertem Kohlenstoff, um eine homogene Mischung zu erhalten;
b. Hochgeschwindigkeitsverkneten der Pulvermischung mit Wasserzusatz, um einen Teig zu erhalten;
c. Formen des genässten Teiges in ein gewünschtes Formstück des Materials;
d. Lufttrocknen des Formstücks bei einer Temperatur unterhalb derer eine Oxidation des verwendeten aktivierten Kohlenstoffs stattfindet.

4. Das Verfahren nach Anspruch 3, worin der genässte Teig in ein gewünschtes Formstück geformt wird durch Extrusion, um eine Struktur mit parallelen Kanälen entlang der Längsachse in einer Anzahl von mehr als 2 und weniger als 100 Kanälen pro Quadratzenitmeter im Querschnitt zu erhalten.

5. Verwendung der Zusammensetzung gemäß dem Verfahren nach Anspruch 3 oder 4 als Absorptionsmaterial für Gase und Dämpfe.

## Revendications

1. Une composition qui comprend des silicates naturels possédant une structure fibreuse et des propriétés malléables avec du charbon actif dispersé de façon homogène sur la structure du silicate **caractérisée par le fait que** la composition est dépourvue d'agglomérants organiques et le silicate naturel est α-sépiolite.

2. Une composition selon la revendication 1 ou 2 avec une relation en poids silicate/charbon actif comprise entre 0.5< r<4

3. Une méthode pour l'élaboration des compositions 1 ou 2 comprenant les étapes suivantes:
a. Mélangé de poudres de α-sépiolite et charbon actif pour en obtenir un mélange homogène.
b. pétrissage à grande vitesse du mélange de poudres avec ajout d'eau pour obtenir une pâte
c. modelage de la pâte humide pour obtention des pièces de matériel présentant la forme désirée.
d. Séchage sous air des pièces modelées à une température inférieure à la température donnant lieu à l'oxidation du charbon actif

4. La méthode de la revendication 3, où la pâte humide est conformée en pièces présentant la forme désirée par extrusion pour obtenir une structure de canaux parallèles le long des axes longitudinales en nombre supérieur à 2 et inférieur à 100 par centimètre carré de la section transversale.

5. L'utilisation de la composition réalisée selon la méthode de la revendication 3 ou 4 comme matériel adsorbant pour gaz et vapeurs.
